# FASCICULE DE BREVET EUROPEEN

(11) **EP 2 521 984 B1**
(45) Date de publication et mention de la délivrance du brevet: **06.12.2017**
(21) Numéro de dépôt: 10800964.8
(22) Date de dépôt: 31.12.2010
(51) Int. Cl.: G06F 21/00, H04L 9/12, H04L 9/08

(54) **PROCEDE DE PROTECTION DE CONTENUS ET DE SERVICES MULTIMEDIA**
VERFAHREN ZUM SCHUTZ VON INHALTEN UND MULTIMEDIADIENSTEN
METHOD FOR PROTECTING CONTENTS AND MULTIMEDIA SERVICES

(30) Priorité: 05.01.2010 FR 1050035
(43) Date de publication de la demande: 14.11.2012
(73) Titulaire: Viaccess, 92057 Paris La Defense Cedex (FR)
(72) Inventeur: NEAU, Louis, F-35410 Chateaugiron (FR)
(74) Mandataire: Ilgart, Jean-Christophe
(86) Numéro de dépôt international: PCT/EP2010/070950
(87) Numéro de publication internationale: WO 2011/083069

(56) Documents cités:
- WO-A2-2007/028099
- FR-A1- 2 902 585
- US-A1- 2008 101 604

## Description

### DOMAINE TECHNIQUE

L'invention se situe dans le domaine de la protection de contenus et vise plus spécifiquement la protection de contenus et de services multimédia distribués par un opérateur à plusieurs abonnés munis de terminaux de réception adaptés à cet effet.

L'invention concerne également un terminal de réception adapté pour recevoir de tels contenus et services et un programme d'ordinateur mémorisé sur un support d'enregistrement et adapté pour mettre en oeuvre le procédé lorsqu'il est exécuté par un ordinateur.

Le procédé s'applique aux contenus protégés fournis à des terminaux tels que des Set-Top-Box, des ordinateurs ou des téléphones mobiles et vise, notamment, à améliorer la protection des modèles économiques des opérateurs et des fournisseurs de technologies de protection de contenus en évitant la redistribution illicite de ces contenus.

### ÉTAT DE LA TECHNIQUE ANTÉRIEURE

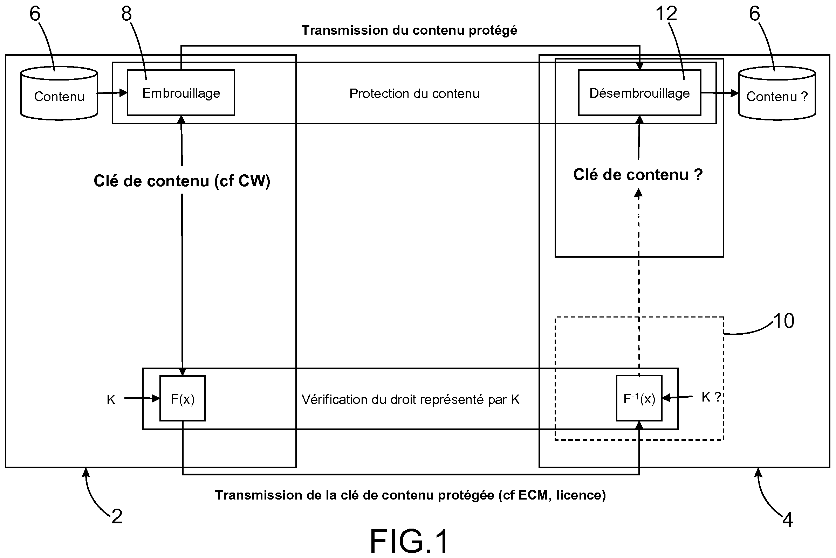

La figure 1 illustre schématiquement une architecture classique pour fournir des contenus embrouillés par une plateforme d'embrouillage 2 à un terminal 4 connecté au réseau d'un opérateur.

Une telle architecture de fourniture de contenus, assure typiquement la protection du contenu à transmettre 6, préalablement embrouillé, côté opérateur, par un module d'embrouillage 8 utilisant une clé de contenu CW.

La clé de contenu est ensuite chiffrée au moyen d'une clé d'accès au contenu K, par application d'une fonction F, puis transmise, sous forme d'un cryptogramme CW*, par l'opérateur à un agent 10 de contrôle d'accès au contenu agencé dans le terminal 4.

Des conditions définissant des usages autorisés dudit contenu peuvent être transmises au terminal parallèlement à la clé d'accès au contenu K.

La révélation de la clé d'accès au contenu K par l'agent 10, en vue de sa fourniture au module de désembrouillage 12 du terminal 4, est soumise à l'obtention préalable, par cet agent 10, d'un droit d'accès au contenu qui se matérialise généralement a minima par l'obtention de la clé d'accès au contenu K.

La clé d'accès au contenu K obtenue par l'agent 10 est ensuite utilisée pour déchiffrer le cryptogramme de la clé de contenu par application de la fonction F⁻¹, inverse de la fonction F, et révéler ainsi la clé de contenu CW. Celle-ci est ensuite fournie au module de désembrouillage 12, agencé dans le terminal 4.

La clé de contenu CW peut être renouvelée régulièrement dans le temps, notamment pour les contenus linéaires, par exemple selon une cryptopériode préétablie, typiquement de 10 secondes sur des flux diffusés.

Cette protection du contenu est généralement mise en oeuvre par un système d'accès conditionnel, ou CAS, pour Conditional Access System, ou par un système de gestion de droits numériques, ou DRM, pour Digital Rights Management. Dans la suite de cette description, les caractéristiques et fonctions de tels systèmes, bien connues de l'homme du métier, ne sont pas décrites plus avant. Pour plus d'informations, le lecteur peut par exemple se reporter aux documents suivantes :
- sur les systèmes d'accès conditionnel, « Functional Model of Conditional Access System », EBU Review, Technical European Broadcasting Union, Brussels, BE, n° 266, 21 décembre 1995 ;
- sur les systèmes de gestion de droits numériques, « DRM Spécification », Open Mobile Alliance OMA-TS-DRM-DRM-V2_0_2-20080723-A, Approved version 2.0.2 - 23 Jul 2008.

En plus de la protection du contenu, une telle architecture de fourniture de contenus assure une protection du service de fourniture dudit contenu. Cette protection est généralement assurée par l'agent de contrôle 10 et par un chargeur d'amorçage maîtrisé (pour boot loader en anglais). Ces deux éléments s'appuient typiquement sur les fonctions de sécurité d'un circuit intégré (chipset) du terminal, selon la disponibilité de ces fonctions dans le circuit intégré choisi.

La protection du service consiste principalement à assurer la conformité fonctionnelle des traitements réalisés par les entités du système, et notamment du terminal, et des données de configuration utilisées par ces derniers, respectivement aux traitements et aux données prévus par l'opérateur.

Il peut par exemple s'agir d'assurer l'activation de la protection de la mémoire, ou la mise en oeuvre de solutions d'anti-dump ou d'anti-debug, visant à empêcher l'observation de l'exécution du programme informatique réalisant le désembrouillage des contenus dans le terminal.

La protection du service s'appuie typiquement sur des techniques cryptographiques et est fondée plus généralement sur la mise en oeuvre de fonctions de sécurité établies lors des phases de conception ou d'intégration du terminal. Celles-ci se traduisent par exemple par des exigences transmises du fournisseur de technologies de protection de contenus, ou de l'opérateur de services de contenus, vers les industriels chargés de fabriquer les circuits intégrés ou les terminaux concernés.

Le respect de ces exigences peut être vérifié notamment au moyen d'un processus de validation ou de certification sur un échantillon très limité de terminaux avant mise sur le marché.

La protection du contenu et la protection du service sont complémentaires au sein de l'architecture de fourniture de contenus, pour assurer une fourniture de contenu efficace. Bien que logiquement liées, ces protections ne sont cependant généralement pas liées dans leurs exécutions. En effet, le non-respect des exigences de sécurité ou de la politique de sécurité du service, typiquement le port JTAG ouvert, le contrôle d'intégrité du code non activé, l'absence de la désactivation des sorties non autorisées (HDD, sorties analogiques, ...), ou une version non à jour de tout ou partie de l'environnement logiciel, n'empêchent pas la révélation de la clé de contenu et l'exploitation de ce contenu.

Notons que le problème de la redistribution des clés de contenu CW est actuellement l'une des failles majeures des systèmes de fourniture de contenus. La résistance et le renouvellement de la sécurisation de la protection de la clé de contenu CW depuis la tête de réseau jusqu'à son utilisation au niveau du module de déchiffrement du circuit intégré du terminal reste un problème majeur.

Par ailleurs, dans le cas d'une diffusion large de contenus à un parc de terminaux de réception, la mise en oeuvre effective des exigences de sécurité et de la politique de sécurité du service ne peut pas être vérifiée de manière dynamique sur l'ensemble du parc de terminaux. Or le non-respect de ces exigences sur un seul des terminaux peut potentiellement mettre en péril tout le modèle économique de l'opérateur.

Par ailleurs, la présentation de l'offre peut par exemple inclure de la publicité ou des liens vers d'autres services annexes, tels que des services associés à la fourniture du contenu, des widgets ou des services de communication, qui peuvent être tout aussi importants pour l'opérateur. Ce dernier peut ainsi se différentier de la concurrence en offrant une expérience utilisateur propre.

Il est par conséquent également impératif de protéger, en plus du contenu, la présentation de l'offre et les services associés.

Un but de l'invention est de lier dans leurs exécutions la protection des contenus fournis par un opérateur à la protection du service supportant leur fourniture, y compris de la présentation de l'offre et des services associés, afin d'assurer la pérennité du modèle économique de l'opérateur.

Dans la suite du document, on parle de sur-chiffrement, lorsque la donnée à protéger est chiffrée au moins deux fois au moyen d'algorithmes de chiffrement symétriques ou asymétriques communs ou distincts et au moins deux clés distinctes respectivement secrètes ou publiques.

Le document FR 2 922 585 concerne un procédé de diffusion, par l'intermédiaire d'un réseau large bande, d'un programme multimédia embrouillé dans lequel une information peut être acheminée vers une adresse multicast de sorte que seul un groupe de plusieurs terminaux correspondants à cette adresse multicast reçoit l'information tandis que d'autres terminaux connectés au même réseau ne reçoivent pas cette information.

Le document FR 2 922 585 concerne un procédé d'obtention par une première entité U d'une valeur dérivée *Kᵣ* à partir d'un paramètre d'entrée *r* et d'informations chiffrées afin de tracer la première entité.

### EXPOSÉ DE L'INVENTION

Ce but est atteint au moyen d'un procédé de protection d'un contenu embrouillé par une clé de contenu CW transmise chiffrée au moyen d'une clé K d'accès au contenu par application d'une fonction F, ledit contenu étant fourni par un système d'émission à au moins un terminal de réception au moyen d'un service configuré localement au niveau dudit terminal de réception selon un ensemble de propriétés Pi i = 1 à N connues du système d'émission, chacune desdites propriétés Pi étant représentées par une donnée xᵢ mémorisée dans ledit système d'émission et par une donnée yᵢ locale et accessible en lecture audit terminal.

Le procédé selon l'invention comporte à l'émission une étape consistant à sur-chiffrer ladite clé de contenu CW par au moins une fonction inversible de sur-chiffrement fᵢ(xᵢ) dépendante d'au moins une propriétés Pi i=1 à n .

Selon un mode préféré de mise en oeuvre, ce procédé comporte les étapes suivantes :
à l'émission,
   - définir un sous-ensemble EP non vide de propriétés Pi, i = 1 à n à vérifier,
   - sur-chiffrer ladite clé de contenu CW en appliquant sur ladite clé de contenu CW les fonctions inversibles de sur-chiffrement fᵢ(xᵢ) pour chaque propriété Pi, i = 1 à n, dudit sous-ensemble EP ,
   - transmettre ladite clé de contenu CW sur-chiffrée au terminal (4),
et à la réception,
   - Pour chaque propriété Pi appartenant audit sous-ensemble EP, lire la donnée locale yᵢ dudit terminal représentant ladite propriété Pi
   - révéler la valeur CW' de ladite clé de contenu CW sur-chiffrée en appliquant sur ladite clé de contenu CW sur-chiffrée les fonctions inverses de sur-chiffrement fᵢ⁻¹(yᵢ) pour chacune des propriétés Pi dudit sous-ensemble EP i=n à 1,
   - désembrouiller le contenu au moyen de la clé de contenu révélée.

Notons que fᵢ(xᵢ) et f⁻¹(yᵢ) étant des fonctions inverses pour un couple de valeurs (xᵢ, yᵢ) pré-déterminé, couple dont chaque membre représente la propriété Pi de service respectivement dans le système d'émission et dans le terminal de réception. Ainsi, pour un sur-chiffrement de la clé de contenu CW par l'une au moins desdites fonctions inversibles de sur-chiffrement fᵢ(xᵢ) calculée dans le système d'émission, si la donnée yᵢ lue localement au récepteur est différente de la valeur attendue, la fonction inverse de sur-chiffrement f⁻¹(yᵢ) calculée à la réception et appliquée à la clé de contenu CW sur-chiffrée sera fausse. Dans ce cas, la clé de contenu CW n'est pas révélée, et une valeur CW', différente de CW est obtenue. Le désembrouilleur, utilisant cette valeur CW' pour traiter le contenu embrouillé, ne pourra donc pas à le désembrouiller. La non-conformité de la propriété Pi considérée du service empêche donc la révélation correcte de la clé CW de contenu, et donc le désembrouillage de celui-ci.

Aussi, si à l'émission, plusieurs propriétés Pᵢ, i = 1 à n, sont prises en compte, elles le seront, à la réception, dans l'ordre inverse, c'est-à-dire pour i variant de n à 1.

Si l'un au moins des couples prédéfinis (xᵢ, yᵢ) représentant les propriétés Pi n'est pas en conformité, les fonctions de sur-chiffrement respectives fᵢ(xᵢ) et f⁻¹(yᵢ) ne sont plus en relation inverse et en conséquence, la révélation de la clé de contenu CW, ainsi que le désembrouillage du contenu, sont erronés.

Dans le mode de réalisation préféré présenté, le sur-chiffrement réalisé de la clé CW de contenu avec au moins une fonction de sur-chiffrement fᵢ(xᵢ) caractéristique de la propriété Pi du service, est un pré-chiffrement dans le sens où il intervient, dans le procédé selon l'invention, avant le chiffrement avec la clé K d'accès au contenu selon l'art antérieur. Dans une variante de l'invention, ce sur-chiffrement est réalisé après le chiffrement avec la clé K d'accès au contenu, et constitue ainsi un post-chiffrement.

Dans les modes de réalisation de l'invention faisant intervenir plusieurs sur-chiffrement, ceux-ci pourront, selon une autre variante de l'invention, comporter au moins un pré-chiffrement et au moins un post-chiffrement tels que définis ci-dessus.

Préférentiellement, la clé de contenu CW n'est révélée qu'après prise en compte de l'ensemble des propriétés Pᵢ, i= 1 à n. A l'émission, la clé de contenu CW sur-chiffrée est transmise au terminal de manière synchronisée avec une liste de références représentant un sous-ensemble EP des propriétés Pᵢ du service à vérifier, correspondant aux données xᵢ, i= 1 à n, utilisées pour calculer les fonctions de sur-chiffrement fᵢ(xᵢ), et aux données yᵢ, i = 1 à n, à utilisées pour le calcul par le terminal des fonctions inverses de sur-chiffrement fᵢ(yᵢ), et à la réception, le terminal, applique successivement, les fonctions inverses fᵢ⁻¹(yᵢ) sur la clé de contenu sur-chiffrée CW et obtient en résultat la clé révélée CW', pour i variant de n à 1.

La prise en compte des propriétés Pi, i= 1 à n, est réalisée systématiquement ou de manière ponctuelle.

L'invention est mise en oeuvre par une plateforme d'embrouillage d'un contenu embrouillé par une clé de contenu CW chiffrée par une clé d'accès au contenu K et fournie avec au moins un service par un opérateur à au moins un terminal de réception, comportant :
- des moyens pour configurer ledit service par un ensemble comprenant un nombre entier de données de configuration xᵢ, i= 1 à n, définissant chacune une propriété Pi, i= 1 à n, d'un contexte de mise en oeuvre dudit service par le terminal,
- des moyens pour chiffrer ladite clé de contenu CW par au moins une valeur numérique de chiffrement calculée en fonction d'au moins une donnée de configuration xᵢ, i= 1 à n.

Côté réception, le contenu est désembrouillé par une plateforme de désembrouillage comportant:
- des moyens pour retrouver chaque valeur numérique de chiffrement xᵢ, i= 1 à n, au moyen de la fonction fᵢ⁻¹, inverse de la fonction fᵢ, i= 1 à n,
- des moyens pour déchiffrer la clé de contenu CW,
- des moyens pour désembrouiller le contenu au moyen de la clé de contenu CW.

Notons que le procédé selon l'invention permet d'utiliser les paramètres de configuration matérielle et/ou logicielle du service supportant la fourniture du contenu disponible au niveau du terminal, non seulement pour vérifier la configuration de ce service, mais aussi pour générer au moins une clé de sur-chiffrement du contenu fourni de sorte que toute modifications desdits paramètre de configuration du service conduit à une clé de contenu erronée.

L'indication de la conformité ou non du service n'est donc ici qu'une conséquence du procédé selon l'invention, qui a en outre l'avantage de ne pas présenter les vulnérabilités connues aux attaques des embranchements logiques de tests conditionnels.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 illustre schématiquement une architecture classique pour la distribution de contenus embrouillés par un opérateur à des terminaux connectés à l'opérateur via un réseau de communication,
- la figure 2 illustre schématiquement une première variante de mise en oeuvre du procédé dans l'architecture de la figure 1,
- la figure 3 illustre schématiquement une deuxième variante de mise en oeuvre du procédé dans l'architecture de la figure 1.

### EXPOSÉ DÉTAILLÉ DE MODES DE RÉALISATION PARTICULIERS

Dans la suite de la description, des références identiques seront utilisées pour désigner les éléments communs à la figure illustrant l'architecture de l'art antérieur et aux différentes figures illustrant l'invention.

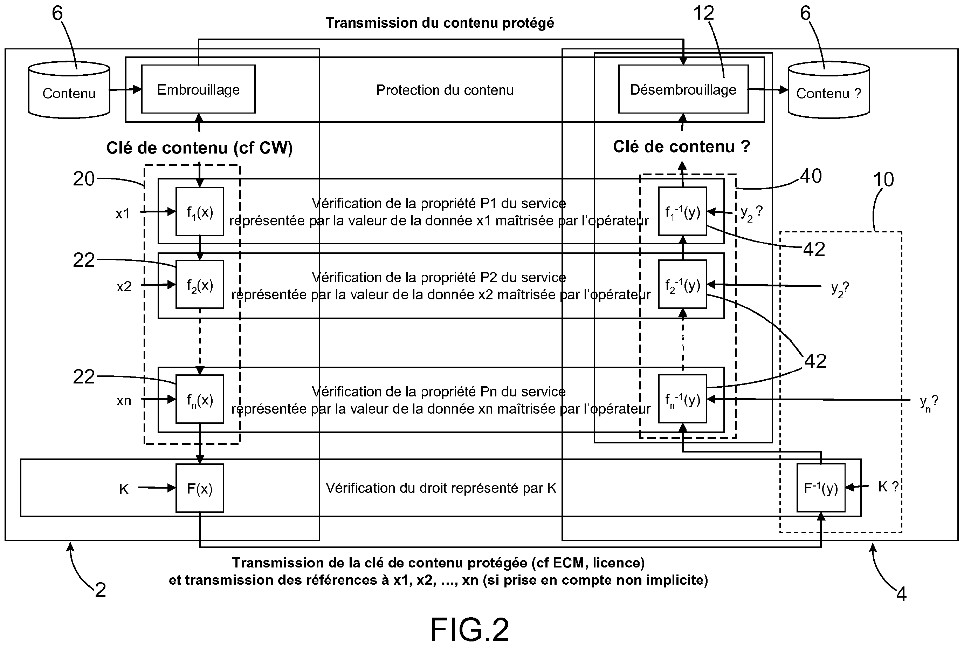

La figure 2 illustre schématiquement le principe général de l'invention consistant à lier la révélation de la clé de contenu CW à une ou plusieurs données de configuration xᵢ, i= 1 à n, du service fourni par l'opérateur.

A cet effet, comme cela est illustré par la figure 2, la plateforme d'embrouillage 2 comporte une unité 20 de sur-chiffrement de la clé de contenu CW préalablement à son chiffrement par une clé d'accès au contenu K, comprenant n sous-modules de sur-chiffrement 22ᵢ, i=1 à n, chaque sous-module 22ᵢ comprenant une routine destinée à appliquer sélectivement à la clé CW chiffrée une fonction inversible fᵢ, i= 1 à n, ayant pour paramètre d'entrée une donnée xᵢ, i= 1 à n, représentative d'une propriété Pᵢ, i= 1 à n, d'un contexte de mise en oeuvre dudit service par le terminal 4. On notera fᵢ(xᵢ) cette fonction inversible de sur-chiffrement.

Notons que les propriétés du service Pᵢ, i=1 à n sont représentées, à l'émission par des valeurs xᵢ spécifiées par l'opérateur, et à la réception par leurs valeurs effectives yᵢ obtenues par mesure ou par calcul dans l'environnement du terminal 4.

Le terminal 4 comporte, en plus de l'agent de contrôle d'accès 10, une unité de calcul 40 destinée à appliquer sélectivement à la clé CW sur-chiffrée la fonction de sur-chiffrement inverse f⁻¹ᵢ(yᵢ), i= 1 à n, inverse de la fonction fᵢ(xᵢ), i= 1 à n, utilisée à l'émission pour sur-chiffrer la clé CW. Lorsque xᵢ et yᵢ sont conformes aux valeurs attendues, f⁻¹ᵢ(yᵢ) (fᵢ(xᵢ) (CW))=CW, le cas échéant, les deux fonctions fᵢ(xᵢ) et f⁻¹ᵢ(yᵢ) ne sont plus en relation inverse.

L'unité de calcul 40 comporte n sous-modules de traitement 42ᵢ, i= 1 à n, destinés à appliquer à la clé de contenu CW déchiffrée au moyen de la fonction F⁻¹ et au moins une fonction f⁻¹ᵢ(yᵢ), i= 1 à n, inverse de la fonction de sur-chiffrement fᵢ(xᵢ), i= 1 à n, appliquée dans la plateforme d'embrouillage 2.

L'agent de contrôle d'accès 10 est configuré pour fournir la clé d'accès au contenu K et les données yᵢ, i= 1 à n, correspondantes aux données xᵢ utilisées par la plateforme d'embrouillage pour calculer la clé de sur-chiffrement fᵢ(xᵢ),i= 1 à n.

A cet effet, l'opérateur transmet au terminal 4 une référence de la (ou des) données xᵢ, i=1 à n, ayant servi, à l'émission, au calcul de la clé de sur-chiffrement fᵢ(xᵢ), i= 1 à n. Les références EP correspondent au sous-ensemble des propriétés de service Pi que l'on souhaite vérifier.

A la réception de ce sous-ensemble EP de références, le terminal 4 détermine, par calcul ou par mesure, les valeurs courantes yᵢ, i= 1 à n, correspondant aux références transmises et applique tour à tour les fonctions inverses *f₁⁻¹(yᵢ)* dans l'ordre i= n à 1 sur la clé CW sur-chiffrée. On obtient ainsi un résultat CW'.

Si les valeurs courantes yᵢ, i= 1 à n correspondent respectivement aux valeurs attendues par l'opérateur, alors la valeur de la clé de contenu CW est révélée par CW' et permet le désembrouillage du contenu (CW étant égal à CW').

Sinon, la valeur de la clé de contenu CW' est fausse et le désembrouillage rend un résultat incompréhensible (CW étant différent de CW') pour la suite de la chaine de traitement du contenu, typiquement le décodage.

Il est à noter que le procédé selon l'invention permet de forcer le terminal à prendre en compte les propriétés Pᵢ, i= 1 à n, du service avant d'autoriser l'utilisation du contenu.

Il est à noter également que si la clé de contenu CW évolue au cours du temps, cas notamment des contenus diffusés ou 'live', les valeurs *xᵢ*, i= 1 à n, peuvent être ajustées pour chaque envoi de clé de contenu CW en fonction des modifications apportées au service ou aux comportements attendus du terminal 4.

Par ailleurs, la conformité des propriétés Pᵢ, i= 1 à n, peut être vérifiée systématiquement ou de manière ponctuelle, voire aléatoire. Si la vérification d'une propriété *Pi* est systématique, alors le calcul de la valeur *yᵢ* côté terminal peut s'avérer implicite et donc la référence à *Pi* n'a pas besoin d'être transmise au terminal.

En outre, les propriétés vérifiées doivent être en adéquation avec le type de diffusion du contenu. Aussi, si une clé de contenu CW est diffusée de manière large sur un ensemble de terminaux, alors les données attendues yᵢ, i= 1 à n, représentatives respectivement des propriétés du service Pᵢ, i= 1 à n, doivent avoir les mêmes représentations respectives sur l'ensemble du parc de terminaux ciblés. Lesdites données yᵢ, i= 1 à n, ont des valeurs accessibles directement ou pouvant être issues d'une mesure ou d'un calcul préalable (hash, ...). Elles peuvent représenter une unique propriété ou une combinaison de propriétés cohérentes du service. Elles doivent également être formatées de manière à être exploitées correctement par les fonctions inverses de sur-chiffrement f⁻¹ᵢ(yᵢ) i= n à 1, de la clé de contenu CW auxquelles elles sont associées.

Ces fonctions fᵢ(xᵢ) et f⁻¹ᵢ(yᵢ) i= 1 à n, peuvent reposer sur des fonctions cryptographiques standards ou propriétaires. Leur complexité prend en compte un compromis entre le niveau de protection attendu et la performance des terminaux. Elles peuvent se décliner sous forme de fonctions relativement simples, telles qu'une addition XOR, une permutation ou une substitution, ou encore sous forme d'algorithmes complexes tels que 3-DES ou AES. Les valeurs xᵢ et yᵢ peuvent représenter un même état de la propriété Pi avec des valeurs numériques différentes bien qu'équivalentes. Dans ce cas, fᵢ(xᵢ) et f⁻¹ᵢ(yᵢ) intègrent des opérations de calcul reformatage des données ramenant à une stricte égalité entre xᵢ et yᵢ et permettant ainsi une définition simple de f⁻¹ᵢ(yᵢ) à partir de fᵢ(xᵢ).

La syntaxe des références EP des données *xᵢ*, i=1 à n, transmises au terminal 4 peut être protégée afin de masquer, au niveau de la messagerie, Pᵢ, i= 1 à n, que l'opérateur souhaite utiliser. Dans ce cas, puisque les références ne changent pas forcément à chaque changement de clé de contenu, les références transmises peuvent être concaténées à un aléa renouvelé à chaque changement de clé de contenu. Le cryptogramme des références est ainsi différent pour chaque clé de contenu.

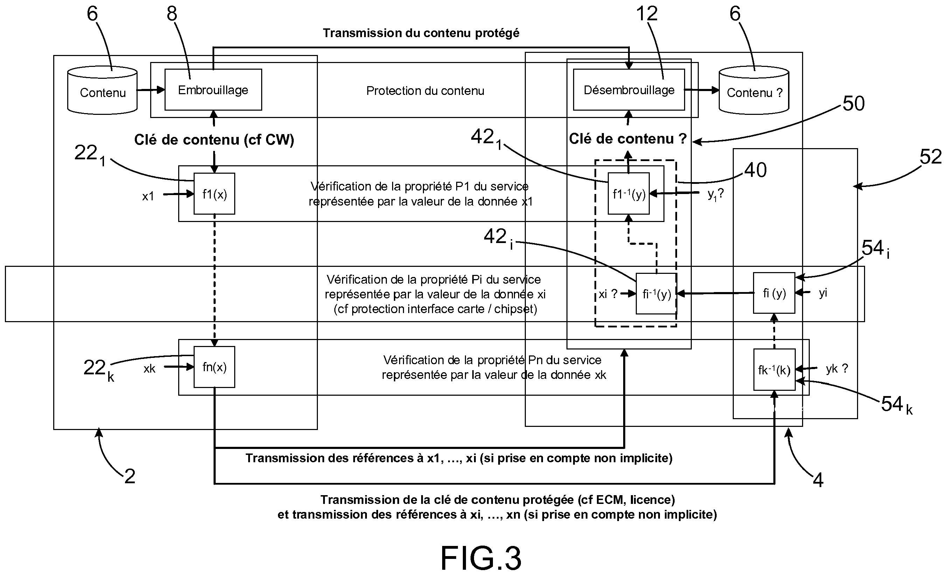

La figure 3 illustre schématiquement la mise en oeuvre du procédé selon l'invention dans un environnement dans lequel coexistent deux modules de sécurité, le module sécurisé du chipset d'un décodeur 50 et le chipset sécurisé d'une carte à puce 52.

Dans ce type d'environnement, l'opérateur peut répartir les propriétés à utiliser entre les différents modules suivant l'ordre de passage du cryptogramme de la clé de contenu CW dans ces modules. Certaines propriétés peuvent également être appliquées par l'un des modules pour vérifier la conformité du comportement de l'autre module.

Le procédé selon l'invention peut également être mis en oeuvre dans la communication entre deux tels modules, tel que par exemple, un module de réception de contenu considéré comme point d'émission et un processeur de sécurité associé considéré comme point de réception au sens du procédé selon l'invention. Les références des propriétés à vérifier doivent être respectivement connues de (ou transmises à) chacun des modules concernés. L'ensemble des propriétés n'a pas besoin de circuler sur l'ensemble des interfaces entre les différents modules.

En référence à la figure 3, la plateforme d'embrouillage 2 comporte un sous-module de sur-chiffrement 22 comprenant une routine destinée à appliquer à la clé CW chiffrée une fonction f₁, ayant pour paramètre d'entrée une donnée x₁ *notée fᵢ*(*xᵢ*)*,* représentatif d'une propriété P₁ de configuration du module sécurisé du chipset du décodeur 50. Le décodeur 50 dispose en lecture de la donnée y₁ correspondant à P₁. Ce dernier comporte un sous-module de traitement 42 destiné à appliquer à la clé de contenu CW la fonction f⁻¹(y₁), inverse de la fonction f₁(x₁), appliquée dans la plateforme d'embrouillage 2 ayant pour entrée la valeur y₁ fournie par le chipset du décodeur 50.

Côté terminal 4, le chipset du décodeur 50 comporte une unité de calcul 40 comportant un sous-module de traitement 42₁ destiné à appliquer à la clé CW sur-chiffrée la fonction f⁻¹₁(y₁), inverse de la fonction f₁, utilisée à l'émission pour sur-chiffrer la clé CW.

Si la donnée y₁ fournie par le chipset du décodeur 50 n'est pas cohérente avec la donnée x₁ utilisée au niveau de la plateforme d'embrouillage comme entrée de la fonction f₁, cela signifiera que la propriété P1 configurée par l'opérateur n'est pas respectée. Dans ce cas, la valeur de la clé de contenu CW n'est pas révélée par le déchiffrement opéré et le désembrouillage rend un résultat incompréhensible pour la suite de la chaine de traitement du contenu, typiquement le décodage.

Par ailleurs, dans l'exemple illustré par la figure 3, la plateforme d'embrouillage 2 comporte au moins un sous-module de sur-chiffrement 22ₖ comprenant une routine destinée à appliquer à la clé CW une fonction fₖ, ayant pour paramètre d'entrée une donnée xₖ, représentatif d'une propriété Pₖ de configuration du module sécurisé du chipset sécurisé de la carte à puce 52. Ce dernier comporte un sous-module de traitement 54ₖ destiné à appliquer à la clé de contenu CW la fonction f⁻¹ₖ(yₖ) inverse de la fonction fₖ(xₖ), appliquée dans la plateforme d'embrouillage 2 ayant pour entrée la valeur yₖ fournie par le chipset sécurisé de la carte à puce 52.

Si la donnée yₖ fournie par le chipset sécurisé de la carte à puce 52 ne correspond pas à la donnée xₖ utilisée au niveau de la plateforme d'embrouillage comme entrée de la fonction fₖ, cela signifiera que la propriété Pₖ configurée par l'opérateur n'est pas respectée. Dans ce cas, la valeur de la clé de contenu CW n'est pas révélée par le déchiffrement opéré et le désembrouillage rend un résultat incompréhensible pour la suite de la chaine de traitement du contenu, typiquement le décodage.

Dans une autre variante de l'invention, le procédé est mis en oeuvre pour protéger l'interface entre le chipset du décodeur 50 et le chipset sécurisé de la carte à puce 52.

Dans ce cas, le chipset sécurisé de la carte à puce 52 comporte au moins un sous-module de sur-chiffrement 54ᵢ, i= 1 à n, comprenant une routine destinée à appliquer à la clé CW chiffrée au moins une fonction fᵢ, ayant pour paramètre d'entrée une donnée xᵢ, représentatif d'une propriété Pᵢ de configuration matérielle et/ou logicielle de l'interface entre le chipset du décodeur 50 et le chipset sécurisé de la carte à puce 52.

L'unité de calcul 40 du chipset du décodeur 50 comporte au moins un sous-module de traitement 42ᵢ, i= 1 à n, destiné à appliquer à la clé de contenu CW au moins une fonction f⁻¹ᵢ(yᵢ), i= n à 1, inverse de la fonction fᵢ(xᵢ), i= 1 à n, appliquée dans le chipset sécurisé de la carte à puce 52.

Si la donnée yᵢ fournie par chipset du décodeur 50 ne correspond pas à la donnée xᵢ utilisée par le sous-module de sur-chiffrement 54ᵢ du chipset sécurisé de la carte à puce 52 comme entrée de la fonction fᵢ, cela signifiera que la propriété matérielle et/ou logicielle Pᵢ de l'interface entre le chipset du décodeur 50 et le chipset sécurisé de la carte à puce 52 configurée par l'opérateur n'est pas respectée. Dans ce cas, la valeur de la clé de contenu CW n'est pas correctement déchiffrée et le désembrouillage rend un résultat incompréhensible pour la suite de la chaine de traitement du contenu, typiquement le décodage.

Le tableau ci-dessous décrit, à titre d'exemple non limitatif, des propriétés Pi internes à l'environnement sécurisé ou externes à celui-ci pouvant être utilisées par le procédé selon l'invention.

| **Propriété** | **Objectif du contrôle de la propriété** | **Intérêt** |
|---|---|---|
| Valeur représentative des caractéristiques courantes de l'environnement sécurisé du terminal, typiquement le module sécurisé du chipset | Conformité des caractéristiques courantes de l'environnement sécurisé du terminal (conformité à la fuse map, fonctionnalités activées ou désactivées (JTAG verrouillé, boot loader en mode sécurisé, indicateur de premier lancement effectué (mise en place de l'environnement terminal cible), chiffrement de la FLASH actif, chiffrement de la RAM actif, ...), nombre de clés, ...) | Contrôle de la conformité de l'environnement sécurisé du terminal par rapport aux exigences et à la politique de sécurité Contrôle des mises à jour Anti-mosc |
| ... | | |
| Etat courant des sorties A/V | Vérification des sorties autorisées pour le contenu (HDMI, HDD, Ethernet, Wifi, ...) | Contrôle E2E de la conformité de la politique de redistribution du contenu |
| Etat courant des mécanismes de protection associés aux sorties A/V | Activation des mécanismes de protection du contenu sur les sorties autorisées (HDCP, Macrovison, DTCP-IP, ...) | |
| ... | | |
| Valeur représentative des services autorisés et/ou des droits d'usage acquis par l'agent de contrôle d'accès | Conformité des services autorisés (liste des identifiants de services ou des opérateurs associés) et normalité des droits d'usage acquis (nombres de droits, date d'expiration des droits, , ...) | Contrôle de la conformité du contrôle d'accès réalisé par l'agent Contrôle des mises à jour Anti MOSC |
| Valeur représentative des listes de révocations associées à des mécanismes de protection de sortie A/V | Conformité de la version courante des listes de révocations associées à des mécanismes de protections de sorties A/V (HDCP, DTCP-IP, CI+, CPCM, ...) | |
| ... | | |
| Valeur représentative des paramètres courants d'accès au(x) service(s) de l'opérateur | Conformité des paramètres courants d'accès au(x) service(x) de l'opérateur (adresse du portail de services, ...) | Contrôle de la conformité du service rendu Contrôle des mises à jour |
| Valeur représentative de la clé de protection de contenu précédente | Suppression de l'accès aléatoire au contenu (forcer la consommation d'une partie d'un contenu, typiquement une publicité, pour accéder à la partie suivante ou au moins son début, ...) | |
| ... | | |

Le procédé selon l'invention s'applique aussi bien aux solutions DRM (pour Digital Right Management) qu'aux solutions CAS (pour Control Access System) pour des services linéaires (live) ou non (VoD, ...) transmis en unicast, multicast ou en broadcast.

Notons que l'authenticité des informations transmises pour le pilotage des sorties A/V d'un terminal n'est plus requise. En effet, si celles-ci ne sont pas positionnées correctement avant révélation de la clé de contenu, ce dernier ne sera pas désembrouillé correctement.

Notons également que dans un contexte de services unicast (VoD, ...), si l'identifiant de l'utilisateur ou du terminal qui a acquis une licence ou un droit sert également de révélateur, alors cet identifiant peut être utilisé comme marque valide pour un dispositif de watermarking.

Le procédé selon l'invention est piloté de manière dynamique sous contrôle de l'opérateur de services depuis la plateforme d'embrouillage 2. Les propriétés du service prises en compte et leurs valeurs représentatives attendues peuvent évoluer au cours du temps selon les besoins de contrainte et les évolutions des contributions des terminaux ciblés par l'opérateur.

L'exécution du processus est strictement la même sur l'ensemble des terminaux recevant un même contenu, que les valeurs des données caractéristiques obtenues soient ou non conformes à leurs valeurs attendues. Il n'y a pas de vérification, ni donc de tests intermédiaires, et seule la valeur finale de la clé de contenu obtenue, permettant ou non de déchiffrer correctement le contenu, indique ou non, que l'ensemble des données caractéristiques prises en compte sont conformes à leurs valeurs attendues.

Grâce au procédé selon l'invention, la complexité pour un attaquant de récupérer la clé de contenu est accrue. Cette complexité ne repose pas uniquement sur la connaissance d'une clé préétablie dans l'environnement sécurisé du terminal, mais dépend également de la configuration matérielle et logicielle utilisée pour la mise en oeuvre du service fourni.

Dans une autre variante de mise en oeuvre du procédé selon l'invention, une partie des révélateurs est dynamique et représentative de l'évolution du service ou de son adaptation par rapport à un contenu donné. Dans cette variante, l'accès à la clé de contenu impose une mise en conformité du terminal.

Par ailleurs, la protection du contenu de bout en bout, la protection de l'agent de contrôle d'accès ou la protection du service de l'opérateur de manière générale, peuvent être liées à la protection de la clé de contenu.

## Revendications

1. Procédé de protection d'un contenu (6) embrouillé par une clé de contenu CW, ledit contenu étant fourni par un système d'émission à au moins un terminal de réception (4), la fourniture du contenu par ledit système d'émission étant réalisée au moyen d'un service configuré localement au niveau dudit terminal de réception par un ensemble de propriétés Pi i = 1 à N, connues du système d'émission, chacune desdites propriétés Pi étant représentées par une donnée xᵢ mémorisée dans ledit système d'émission et par une donnée yᵢ obtenue par mesure ou par calcul dans l'environnement du terminal de réception (4) et accessible localement en lecture par ce terminal de réception (4) au même titre qu'une clé K d'accès au contenu, à l'émission, ladite clé de contenu CW est sur-chiffrée par une fonction inversible de chiffrement F au moyen de la clé d'accès au contenu K et au moins une fonction inversible de sur-chiffrement fᵢ(xᵢ) dépendante d'au moins une propriétés Pi, i=1 à n, procédé **caractérisé en ce que**:
à l'émission, il comporte les étapes consistant à:
- définir un sous-ensemble EP non vide de propriétés Pi à vérifier, i = 1 à n, la vérification des propriétés Pi, i= 1 à n étant réalisée systématiquement ou de façon ponctuelle,
- sur-chiffrer ladite clé de contenu CW en appliquant, selon une séquence ordonnée de fonctions, sur ladite clé de contenu CW la fonction inversible F et les fonctions inversibles de sur-chiffrement fᵢ (xᵢ) pour chaque propriété Pi, i = 1 à n, dudit sous-ensemble EP,
- transmettre ladite clé de contenu CW sur-chiffrée au terminal (4) avec une liste de références représentant le sous-ensemble EP de propriétés Pᵢ du service à vérifier, correspondant aux données xᵢ, i= 1 à n, utilisées pour calculer les fonctions inversibles de sur-chiffrement fᵢ(xᵢ), et aux données yi, i = 1 à n, à utiliser pour le calcul par le terminal des fonctions inverses de sur-chiffrement fᵢ⁻¹(yᵢ),
et à la réception,
- pour chaque propriété Pi appartenant audit sous-ensemble EP, lire la donnée locale yᵢ dudit terminal représentant ladite propriété Pi,
- révéler la valeur CW' de ladite clé de contenu CW en appliquant sur la clé de contenu sur-chiffrée, selon une séquence inverse à ladite séquence ordonnée, la fonction inverse de chiffrement F⁻¹ et les fonctions inverses de sur-chiffrement fᵢ⁻¹(yᵢ) pour chacune des propriétés Pi dudit sous-ensemble EP, la clé de contenu n'étant révélée qu'après vérification de toute les propriétés Pᵢ, i=1 à n, dudit sous-ensemble EP,
- désembrouiller le contenu au moyen de la valeur révélée CW' de ladite clé de contenu CW,

2. Programme d'ordinateur mémorisé sur un support d'enregistrement **caractérisé en ce qu'**il comporte des instructions pour mettre en oeuvre les étapes du procédé selon la revendication 1 mises en oeuvre à l'émission lorsqu'il est exécuté par un ordinateur.

3. Plateforme d'embrouillage (2) d'un contenu par une clé de contenu CW, ledit contenu étant fourni par ladite plateforme à au moins un terminal (4) de réception au moyen d'un service configuré localement au niveau dudit terminal de réception selon un ensemble de propriétés Pi i = 1 à N connues de ladite plateforme, chacune desdites propriétés à vérifier Pi étant représentées par une donnée xᵢ mémorisée dans ladite plateforme et par une donnée yᵢ obtenue par mesure ou par calcul dans l'environnement du terminal de réception (4) et accessible localement en lecture par ce terminal de réception au même titre qu'une clé K d'accès au contenu, plateforme d'embrouillage comportant:
- des moyens pour définir un sous-ensemble EP non vide de propriétés Pᵢ à vérifier, i= 1 à n, la vérification des propriétés Pᵢ étant réalisée systématiquement ou de façon ponctuelle,
- des moyens pour sur-chiffrer ladite clé de contenu CW en appliquant sur celle-ci, selon une séquence ordonnée de fonctions, une fonction inversible de chiffrement F au moyen de la clé d'accès au contenu K et au moins une fonction inversible de sur-chiffrement fᵢ(xᵢ) pour chaque propriété Pᵢ, i=1 à n, sous-ensemble EP
- des moyens pour transmettre la clé de contenu CW sur-chiffrée au terminal (4) avec une liste de références représentant le sous-ensemble EP des propriétés Pᵢ du service à vérifier, correspondant aux données xᵢ, i= 1 à n, utilisées pour calculer les fonctions inversibles de sur-chiffrement fᵢ(xᵢ), et aux données yi, i = 1 à n, à utiliser pour le calcul par le terminal (4) des fonctions inverses de sur-chiffrement fᵢ⁻¹(yᵢ).

4. Plateforme de désembrouillage d'un contenu embrouillé par une clé de contenu CW, ledit contenu étant fourni par une plateforme d'embrouillage à la plateforme de désembrouillage au moyen d'un service configuré localement au niveau de ladite la plateforme de désembrouillage selon un ensemble de propriétés à vérifier Pᵢ, i = 1 à N, connues de ladite plateforme d'embrouillage, chacune desdites propriétés Pi étant représentées par une donnée xᵢ mémorisée dans ladite plateforme d'embrouillage et par une donnée yᵢ obtenue par mesure ou par calcul dans l'environnement de plateforme de désembrouillage et accessible localement en lecture par cette plateforme de désembrouillage au même titre qu'une clé K d'accès au contenu, la vérification desdites propriétés Pi, i= 1 à n, étant réalisée systématiquement ou de façon ponctuelle,
, Plateforme de désembrouillage **caractérisée en ce qu'**elle comporte :
- des moyens pour recevoir la clé de contenu CW sur-chiffrée et une liste de références représentant un sous-ensemble EP non vide de propriétés Pᵢ à vérifier, i= 1 à n, correspondant aux données xᵢ, i= 1 à n, utilisées par la plateforme d'embrouillage pour calculer des fonctions inversibles de sur-chiffrement fᵢ(xᵢ), et aux données yi, i = 1 à n, à utiliser par la plateforme de désembrouillage pour calculer des fonctions inverses de sur-chiffrement fᵢ⁻¹(yᵢ), la clé de contenu étant sur-chiffrée par application sur la clé de contenu CW, selon une séquence ordonnée de fonctions, d'une fonction inversible de sur-chiffrement F au moyen de la clé d'accès au contenu K et d'au moins une fonction inversible de sur-chiffrement fᵢ(xᵢ) pour chaque propriété Pᵢ, i=1 à n, sous-ensemble EP,
- des moyens pour lire la donnée locale yᵢ représentant chaque propriété Pi dudit sous-ensemble EP,
- des moyens pour révéler la valeur CW' de ladite clé de contenu CW en appliquant sur la clé de contenu sur-chiffrée, selon une séquence inverse à ladite séquence ordonnée, la fonction inverse de chiffrement F⁻¹ et les fonctions inverses de sur-chiffrement fᵢ⁻¹(yᵢ) pour chacune des propriétés Pi dudit sous-ensemble EP, la clé de contenu n'étant révélée qu'après vérification de toutes les propriétés Pᵢ, i= 1 à n, du sous-ensemble EP,
- des moyens pour désembrouiller le contenu au moyen de la valeur révélée de ladite clé de contenu.

## Patentansprüche

1. Verfahren zum Schutz eines Inhalts (6), der mit einem Inhaltsschlüssel CW verschlüsselt ist, wobei der Inhalt von einem Sendesystem zum Senden an zumindest ein Empfangsterminal (4) bereitgestellt wird, wobei die Bereitstellung des Inhalts durch das Sendesystem mittels eines Dienstes erfolgt, der lokal im Bereich des Empfangsterminals durch eine Gruppe von Merkmalen Pi, i = 1 bis N, konfiguriert ist, die dem Sendesystem bekannt sind, wobei jedes der Merkmale Pi von einem in dem Sendesystem abgespeicherten Datenwert xᵢ und von einem durch Messung oder Berechnung in der Umgebung des Empfangsterminals (4) erhaltenen und von diesem Empfangsterminal (4) lokal im Lesemodus zugänglichen Datenwert yᵢ dargestellt wird, ebenso mit einem Zugriffsschlüssel K zum Zugriff auf den Inhalt beim Versenden, wobei der Inhaltsschlüssel CW mit einer invertierbaren Verschlüsselungsfunktion F mittels des Zugriffsschlüssels K zum Zugriff auf den Inhalt und mit zumindest einer invertierbaren Überverschlüsselungsfunktion fᵢ(xᵢ) überverschlüsselt ist, die von zumindest einem Merkmal Pi abhängt, i = 1 bis n, wobei das Verfahren **dadurch gekennzeichnet ist, dass**
es beim Versenden folgende Schritte umfasst:
- Definieren einer nicht leeren Untergruppe EP von zu überprüfenden Merkmalen Pi, i = 1 bis n, wobei die Überprüfung der Merkmale Pi, i = 1 bis n, systematisch oder punktweise erfolgt,
- Überverschlüsseln des Inhaltsschlüssels CW, indem gemäß einer geordneten Sequenz von Funktionen die invertierbare Funktion F und die invertierbaren Funktionen der Überverschlüsselung fᵢ (xᵢ) für jedes Merkmal Pi, i = 1 bis n, der Untergruppe EP auf den Inhaltsschlüssel CW angewendet werden,
- Übertragen des überverschlüsselten Inhaltsschlüssels CW an das Terminal (4), und zwar mit einer Liste von Referenzen, welche die Untergruppe EP von Merkmalen Pi des zu überprüfenden Dienstes darstellen, die den Datenwerten xᵢ, i = 1 bis n, entsprechen, die zum Berechnen der invertierbaren Überverschlüsselungsfunktionen fᵢ (xᵢ) verwendet werden, sowie den Datenwerten yᵢ, i = 1 bis n, entsprechen, die zum Berechnen der Umkehrfunktionen der Überverschlüsselung fᵢ⁻¹ (yᵢ) durch das Terminal zu verwenden sind,
und beim Empfangen
- für jedes Merkmal Pi, das der Untergruppe EP angehört, Einlesen des das Merkmal Pi darstellenden, lokalen Datenwerts yᵢ durch das Terminal,
- Ermitteln des Werts CW' des Inhaltsschlüssels CW, indem gemäß einer zur geordneten Sequenz umgekehrten Sequenz die Umkehrfunktion der Verschlüsselung F⁻¹ und die Umkehrfunktionen der Überverschlüsselung fᵢ⁻¹ (xᵢ) für jedes der Merkmale Pi der Untergruppe EP auf den überverschlüsselten Inhaltsschlüssel angewendet werden, wobei der Inhaltsschüssel erst nach Überprüfung sämtlicher Merkmale Pi, i = 1 bis n, der Untergruppe EP ermittelt wird,
- Entschlüsseln des Inhalts mittels des ermittelten Werts CW' des Inhaltsschlüssels CW.

2. Computerprogramm, das auf einem Aufzeichnungsträger abgespeichert ist, **dadurch gekennzeichnet, dass** es Anweisungen zum Ausführen der Schritte des Verfahrens nach Anspruch 1 umfasst, die beim Versenden ausgeführt werden, wenn es auf einem Computer läuft.

3. Plattform (2) zum Verschlüsseln eines Inhalts mit einem Inhaltsschlüssel CW, wobei der Inhalt zumindest einem Empfangsterminal (4) von der Plattform mittels eines Dienstes bereitgestellt wird, der lokal im Bereich des Empfangsterminals gemäß einer Gruppe von Merkmalen Pi i = 1 bis N konfiguriert ist, die der Plattform bekannt sind, wobei jedes der zu überprüfenden Merkmale Pi von einem in der Plattform abgespeicherten Datenwert xᵢ und von einem durch Messung oder Berechnung in der Umgebung des Empfangsterminals (4) erhaltenen und von diesem Empfangsterminal (4) lokal im Lesemodus zugänglichen Datenwert yᵢ dargestellt wird, sowie mit einem Zugriffsschlüssel K zum Zugriff auf den Inhalt, wobei die Verschlüsselungsplattform enthält:
- Mittel zum Definieren einer nicht leeren Untergruppe EP von zu überprüfenden Merkmalen Pi, i = 1 bis n, wobei die Überprüfung der Merkmale Pᵢ systematisch oder punktweise erfolgt,
- Mittel zum Überverschlüsseln des Inhaltsschlüssels CW, indem auf diesen gemäß einer geordneten Sequenz von Funktionen eine invertierbare Verschlüsselungsfunktion F mittels des Zugriffsschlüssels K zum Zugriff auf den Inhalt und zumindest eine invertierbare Funktion der Überverschlüsselung fᵢ (xᵢ) für jedes Merkmal Pi, i = 1 bis n, der Untergruppe EP angewendet werden,
- Mittel zum Übertragen des überverschlüsselten Inhaltsschlüssels CW an das Terminal (4), und zwar mit einer Liste von Referenzen, welche die Untergruppe EP von Merkmalen Pi des zu überprüfenden Dienstes darstellen, die den Datenwerten xᵢ, i = 1 bis n, entsprechen, die zum Berechnen der invertierbaren Überverschlüsselungsfunktionen fᵢ (xᵢ) verwendet werden, sowie den Datenwerten yᵢ, i = 1 bis n, entsprechen, die zum Berechnen der Umkehrfunktionen der Überverschlüsselung fᵢ⁻¹ (yᵢ) von dem Terminal (4) zu verwenden sind.

4. Plattform zum Entschlüsseln eines Inhalts, der mit einem Inhaltsschlüssel CW verschlüsselt ist, wobei der Inhalt zumindest einer Entschlüsselungsplattform durch die Verschlüsselungsplattform mittels eines Dienstes bereitgestellt wird, der lokal im Bereich der Entschlüsselungsplattform gemäß einer Gruppe von Merkmalen Pi, i = 1 bis N, konfiguriert ist, die der Verschlüsselungsplattform bekannt sind, wobei jedes der Merkmale Pi von einem in der Verschlüsselungsplattform abgespeicherten Datenwert xᵢ und von einem durch Messung oder Berechnung in der Umgebung der Entschlüsselungsplattform erhaltenen und von dieser Entschlüsselungsplattform lokal im Lesemodus zugänglichen Datenwert yᵢ dargestellt wird, ebenso wie mit einem Zugriffsschlüssel K zum Zugriff auf den Inhalt, wobei die Überprüfung der Merkmale Pi, i = 1 bis n, systematisch oder punktweise erfolgt,
wobei die Entschlüsselungsplattform **dadurch gekennzeichnet ist, dass** sie enthält:
- Mittel zum Empfangen des überverschlüsselten Inhaltsschlüssels CW und einer Liste von Referenzen, welche eine nicht leere Untergruppe EP von zu überprüfenden Merkmalen Pi, i = 1 bis n, darstellen, die den Datenwerten xᵢ, i = 1 bis n, entsprechen, die von der Verschlüsselungsplattform zum Berechnen der invertierbaren Überverschlüsselungsfunktionen fᵢ (xᵢ) verwendet werden, sowie den Datenwerten yᵢ, i = 1 bis n, entsprechen, die von der Entschlüsselungsplattform zum Berechnen der Umkehrfunktionen der Überverschlüsselung fᵢ⁻¹ (yᵢ) zu verwenden sind, wobei der Inhaltsschlüssel überverschlüsselt wird, indem gemäß einer geordneten Sequenz von Funktionen eine invertierbare Funktion der Überverschlüsselung F mittels des Zugriffschlüssels K zum Zugriff auf den Inhalt und zumindest eine invertierbare Funktion der Überverschlüsselung fᵢ (xᵢ) für jedes Merkmal Pi, i = 1 bis n, der Untergruppe EP auf den Inhaltsschlüssel CW angewendet werden,
- Mittel zum Lesen des lokalen Datenwertes yi, der jedes Merkmal Pi der Untergruppe EP darstellt,
- Mittel zum Ermitteln des Werts CW' des Inhaltsschlüssels CW, indem gemäß einer zur geordneten Sequenz umgekehrten Sequenz die Umkehrfunktion der Verschlüsselung F⁻¹ und die Umkehrfunktionen der Überverschlüsselung fᵢ⁻¹ (yᵢ) für jedes der Merkmale Pi der Untergruppe EP auf den überverschlüsselten Inhaltsschlüssel angewendet werden, wobei der Inhaltsschüssel erst nach Überprüfung sämtlicher Merkmale Pi, i = 1 bis n, der Untergruppe EP ermittelt wird,
- Mittel zum Entschlüsseln des Inhalts mittels des ermittelten Werts des Inhaltsschlüssels.

## Claims

1. A method for protection of a content (6) scrambled by a content key CW transmitted encrypted by a content access key K, where the said content is supplied by a transmission system to at least one reception terminal (4) by means of a service configured locally within the said reception terminal according to a set of properties Pi, i= 1 to N, which are known to the transmission system, each of the said properties Pi is represented by a data element xᵢ recorded in the said transmission system and by a local data element yᵢ which is obtained by measurement or calculation in the environment of the reception terminal (4) and which is accessible in read-only mode in the said reception terminal (4) in the same way as a content access key K, a method in which at transmission, said content key CW is superencrypted by a reversible function F by means of the contentaccess key K and at least a reversible superencryption function fᵢ(xᵢ), which is dependent on at least one of the properties Pi, i=1 to n, a method **characterised in that**:
At transmission it comprises the steps of:
- defining a non-empty subset of properties Pi to be verified, i = 1 to n, the verification of the properties Pi, i= 1 to n, is performed systematically or on a one-off basis,
- superencrypting the said content key CW by applying, according to an ordered sequence of functions, to the said content key CW the reversible F and the reversible superencryption functions fᵢ(xᵢ) for each property Pi, i = 1 to n, of the said subset EP,
- transmitting said superencrypted content key CW to the terminal (4), with a list of references designating the subset EP consisting of the properties Pi of the service to check, corresponding to data elements xᵢ, i= 1 to n, used to calculate the reversible superencryption functions fᵢ(xᵢ), and to the data elements yi, i=1 to n, to be used by the terminal (4) to calculate the reverse superencryption functions fᵢ⁻¹ (yᵢ),
and at reception,
- for each property Pi belonging to the said subset EP, reading the local data element yᵢ of the said terminal (4) representing the said property Pᵢ,
- revealing the value CW' of said content key CW by applying to the superencrypted content key, according to a sequence inverse to the ordered sequence, the reverse encryption function F⁻¹ and the reverse superencryption functions fᵢ⁻¹(yᵢ) for each of the properties Pi of the said subset EP, i=n to 1, the content key CW is revealed only after verification of all the properties Pᵢ, i= 1 to n of said subset EP,
- unscrambling the content by means of the revealed value CW' of the said content key CW.

2. A computer program recorded on a recording media **characterised in that** it comprises instructions to implement the steps of the method according to claim 1 when it is executed at transmission by a computer.

3. A platform (2) for scrambling a content by a content key CW said content is supplied by said platform to at least one reception terminal (4) by means of a service configured locally within the said reception terminal according to a set of properties Pi, i = 1 to N, known to the said platform, where each of the said properties Pi to be verified is represented by a data element xᵢ recorded in the said platform, and by a data element yᵢ obtained by measurement or calculation in the environment of the reception terminal (4) and which is locally accessible in read-only mode by said reception terminal (4) in the same way as the content access key K, the scrambling platform comprising:
- means for defining a non-empty EP subset of properties Pi to be verified, i=1 to n, the verification of the properties Pi, i= 1 to n, is performed systematically or on a one-off basis,
- means for superencrypting said content key CW by applying to the later, according to an ordered sequence of functions, a reversible encryption function F by means of the access content key K and at least a reversible superencrypting function fᵢ(xᵢ) for each property Pi, i= 1 to n of the subset EP,
- means for transmitting said superencrypted content key CW to the terminal (4), with a list of references designating the subset EP consisting of the properties Pi of the service to check, corresponding to data elements xᵢ, i= 1 to n, used to calculate the reversible superencryption functions fᵢ(xᵢ), and to the data elements yi, i=1 to n, to be used by the terminal (4) to calculate the reverse superencryption functions fᵢ⁻¹(yi).

4. A platform for descrambling a content scrambled by a content key CW, where the said content is supplied by a scrambling platform (2) to the descrambling platform by means of a service configured locally within the said descrambling platform according to a set of properties Pi, i= 1 to N, which are known to the scrambling platform, each of the said properties Pi is represented by a data element xᵢ recorded in said scrambling platform and by a local data element yᵢ which is obtained by measurement or calculation in the environment of the descrambling platform and which is locally accessible in read-only mode by said descrambling platform in the same way as a content access key K, the verification of the properties Pi, i= 1 to n, is performed systematically or on a one-off basis, descrambling platform **characterised by**:
- means for receiving the content key CW with a list of references representing a non-empty subset EP consisting of the properties Pi to verify, i=1 to n, corresponding to the data elements xᵢ, i=1 to n, used by the scrambling platform (2) to calculate the reversible superencryption functions fᵢ(xᵢ), and to the data elements yi, i=1 to n, to be used by the descrambling platform to calculate the reverse superencryption functions fᵢ⁻¹(yᵢ), the content key CW being superencrypted by applying to said content key CW, according to an sequence inverse to the ordered sequence, an inversible encryption function F by means of a content access key K and at least an inversible superencryption functions fᵢ(xᵢ) for each of the properties Pi of the said subset EP, i=1 to n,
- means for reading the local data yᵢ representing each property Pi of said subset EP,
- means for revealing the value CW' of said superencrypted content key CW by applying to the superencrypted content key, according to a sequence inverse to the ordered sequence, the reverse encryption function F⁻¹ and the the reverse superencryption functions fᵢ⁻¹(yᵢ) for each of the properties Pi of the said subset EP, i=n to 1, the content key CW is revealed only after verification of all the properties Pᵢ, i= 1 to n of said subset EP,
- means for descrambling the content by means of the revealed value of the said content key.
